Europäisches Patentamt

European Patent Office

Office européen des brevets

(11) Veröffentlichungsnummer: **0 459 118 B1**

(12) **EUROPÄISCHE PATENTSCHRIFT**

(45) Veröffentlichungstag der Patentschrift: **14.12.94**

(21) Anmeldenummer: **91105857.6**

(22) Anmeldetag: **12.04.91**

(51) Int. Cl.⁵: **G01D 5/24**

(54) **Kapazitiver Stellungsgeber.**

(30) Priorität: **22.05.90 DE 4016434**

(43) Veröffentlichungstag der Anmeldung:
**04.12.91 Patentblatt 91/49**

(45) Bekanntmachung des Hinweises auf die
Patenterteilung:
**14.12.94 Patentblatt 94/50**

(84) Benannte Vertragsstaaten:
**DE FR GB**

(56) Entgegenhaltungen:
**EP-A- 0 161 059**
**DE-A- 2 215 340**
**DE-A- 2 601 088**

(73) Patentinhaber: **ROBERT BOSCH GMBH**
**Postfach 30 02 20**
**D-70442 Stuttgart (DE)**

(72) Erfinder: **Wocher, Berthold, Dr. Dipl.-Ing.**
**Korntaler Strasse 23**
**D-7250 Leonberg (DE)**
Erfinder: **Bollhagen, Heins-Erdam**
**Eltinger Strasse 61**
**D-7250 Leonberg (DE)**
Erfinder: **Steinlechner, Siegbert, Dipl.-Ing.**
**In den Ziegelwiesen**
**D-7250 Leonberg-Warmbronn (DE)**

**Beschreibung**

Stand der Technik

Die Erfindung betrifft einen kapazitiven Stellungsgeber, insbesondere Winkelsensor, vorzugsweise zur Erfassung der Drosselklappenstellung bei Brennkraftmaschinen.

In vielen Bereichen der Technik ist es erforderlich, die Stellung eines Elements einer Vorrichtung zu erfassen, um -in Abhängigkeit von dieser Stellung- bestimmte Betriebsparameter oder dergleichen der Vorrichtung zu beeinflussen.

In der Kraftfahrzeugtechnik ist es unter anderem erforderlich, die Drosselklappenstellung zu ermitteln, die einem eine Brennkraftmaschine betreibenden Steuergerät zur Bereitstellung der notwendigen Betriebsparameter (z.B. Zündzeitpunkt, Einspritzdauer usw.) zugeleitet wird.

Es ist bekannt, die Drosselklappenstellung mit Hilfe eines Potentiometers zu ermitteln. Diese Lösung hat jedoch den Nachteil, daß sie aufgrund von Verschleißerscheinungen nicht genügend zuverlässig ist. In der Kraftfahrzeugtechnik tritt die Besonderheit sehr großer Temperaturschwankungen und starker Schüttelbeanspruchungen auf, denen auf Dauer Widerstandspotentiometer nicht mit der hinreichenden Sicherheit gewachsen sind.

Aus der US-PS 4 644 570 ist ein induktiver Stellungsgeber bekannt. Dieser weist auf einem Substrat eine Spulenanordnung auf, die mit kreisabschnittförmigen, in ihrer Relativlage zur Spulenanordnung stellungsabhängigen Elementen nach dem Wirbelstromprinzip zusammenarbeitet. Die Spulenanordnung ist spiegelsymmetrisch aufgebaut, so daß das Kreisabschnittselement in gleichem Maße, wie eine Überlappung der einen Spule der Spulenanordnung erfolgt, die andere Spule freigibt. Die Spulenanordnung ist an eine Auswerteelektronik angeschlossen. Die diskreten Strombahnen der Spulenanordnung führen zu einer entsprechenden "Welligkeit" des magnetischen Feldes, wodurch Nichtlinearitäten entstehen.

Aus der EP-A-0 161 059 ist ein kapazitiver Winkelmesser gemäß des Obergriffs des Anspruchs 1 bekannt, bei dem die bewegbaren Teile als zwei kreisförmige, zu einander drehbare Platten ausgebildet sind. Die Elektroden auf der einen Platte und die Gegenelektrode auf der anderen Platte sind so angeordnet, daß drei Elektroden, die im Außenbereich der einen Platte liegen, nur teilweise und in einem Maß, der von der Winkelstellung der zwei Platten zu einander abhängt, und eine weitere Elektrode im Zentralbereich der einen Platte stets völlig von der gegenüberliegenden Gegenelektrode überdeckt werden. An die Elektroden werden jeweils um 120 Grad gegeneinander verschobene Spannungen gleicher Amplitude und Frequenz angelegt. Eingesetzt werden soll dieser Winkelmesser z.B. in Einrichtungen zur Überprüfung von Fernsehgeräten. Der Einsatz als Winkelmesser zur Bestimmung eines Winkels beispielsweise einer Welle oder ähnlichem ist nicht explizit erwähnt.

Aus der DE-OS 26 01 088 ist ein Lagemeßwertumwandler bekannt, der zwei relativ zueinander bewegliche elektrostatisch miteinander gekoppelte Elektroden aufweist. Dabei sind zwei Sätze von ersten Elektroden auf der Oberfläche des einen Teiles angeordnet und eine Vielzahl von Sätzen von zweiten Elektroden auf der Oberfläche des anderen Teiles. Zur Winkelmessung wird eine äußere Spannung an die zweiten Elektroden angelegt, um in den ersten Elektroden eine Spannung zu induzieren, die kapazitiv gekoppelt als Ausgangssignal abgegriffen wird. Dieses Ausgangssignal ändert sich in Abhängigkeit der Relativverschiebung der beiden Wandlerteile und ermöglicht damit eine Winkelbestimmung.

Vorteile der Erfindung

Der erfindungsgemäße Stellungsgeber mit den im Hauptanspruch genannten Merkmalen hat demgegenüber den Vorteil, daß er ein Meßergebnis mit großer Reproduzierbarkeit und Linearität liefert sowie im wesentlichen unabhängig von Temperaturschwankungen und Schüttelbeanspruchungen ist. Im Gegensatz zu den eingangs genannten bekannten Stellungsgebern arbeitet er nach dem kapazitiven Prinzip. Hierzu ist eine sich in Abhängigkeit von der Stellung in ihrem Kapazitätswert ändernde Kondensatoranordnung vorgesehen. Diese besteht aus zwei relativ zueinander bewegbaren Teilen, wobei die Relativstellung dieser beiden Teile stellungsabhängig ist. Eines der beiden Teile weist mehrere Elektroden auf, von denen eine erste Elektrode mit einer ersten Wechselspannung und eine zweite Elektrode mit einer zur ersten Wechselspannung gegenphasigen zweiten Wechselspannung erregt wird und mit einer dritten Elektrode, an der eine dritte Wechselspannung liegt, die durch ihren Betrag und ihre Phasenlage die von den Elektroden gemeinsam auf eine Gegenelektrode des anderen Teils influenzierte Spannung auf den Wert "0" kompensiert, wobei Betrag und Phasenlage der dritten Wechselspannung relativ zu einem Bezugswert ein Maß für die Relativstellung der bewegbaren Teile und damit für die zu erfassende Stellung ist. Die erste und die zweite Elektrode erzeugen also durch die jeweils an ihnen liegende Wechselspannung ein elektrisches Feld, das zu einer influenzierten Spannung an der Gegenelektrode führt. Die erste und die zweite Wechselspannung sind fest vorgegeben. Die dritte Wechselspannung wird stellungsabhängig beeinflußt, so daß mit ihrer Hilfe der genannte Zustand herbeigeführt werden kann, bei dem die von der ersten, der zweiten und der dritten Elektrode gemeinsam auf die Gegenelektrode influenzierte Spannung den Wert "0" annimmt. Alternativ wäre eine ebenfalls nach dem erfindungsgemäßen Prinzip arbeitende Variante denkbar, bei der nicht der Wert "0", sondern ein anderer Vorgabewert angenommen wird. Da die beiden, die Elektroden beziehungsweise die Gegenelektrode aufweisenden Teile berührungslos zueinander arbeiten, treten insoweit keine Verschleißerscheinungen auf. In Abhängigkeit von der Relativstellung der ersten und zweiten Elektrode zur Gegenelektrode ergibt sich eine mehr oder minder große aktive Kondensatorfläche, wobei vorzugsweise die der einen Elektrode zugeordnete aktive Fläche in dem Maße zu- beziehungsweise abnimmt, wie die aktive Fläche der anderen Elektrode ab- beziehungsweise zunimmt. Die dritte Elektrode wirkt mit der Gegenelektrode stets in gleichbleibender Weise zusammen, das heißt, die vom elektrischen Feld bestimmte Kopplung ist stellungsunabhängig. Vorzugsweise läßt sich dies dadurch erzielen, daß über den gesamten Stellungsbereich des erfindungsgemäßen Stellungsgebers die aktiv wirkende Fläche zwischen der dritten Elektrode und der Gegenelektrode gleich groß bleibt, das heißt, die dritte Elektrode bleibt stets vollflächig von der Gegenelektrode überdeckt.

Wie vorstehend bereits erwähnt, ist somit die Gegenelektrode derart ausgestaltet, daß im gesamten Meßbereich (Stellungsbereich) die dritte Elektrode stets vollflächig einem entsprechenden, ebenso großen Anteil der Gegenelektrode gegenüberliegt. Hierdurch ist die stellungsunabhängige Kopplung zwischen dritter Elektrode und Gegenelektrode realisiert.

Ferner sei hier nochmals erwähnt, daß die Gegenelektrode den ersten und zweiten Elektroden mit derartigen Anteilen gegenüberliegt, daß sich bei einer Stellungsänderung die aktive Fläche zwischen der ersten Elektrode und der Gegenelektrode um das Maß verkleinert (vergrößert) wie die aktive Fläche zwischen der zweiten Elektrode und der Gegenelektrode zunimmt (abnimmt). Mithin ist die von der ersten und der zweiten Elektrode influenzierte Spannung von der Relativstellung der beiden Teile der Kondensatoranordnung abhängig.

Zur Homogenisierung der elektrischen Felder der Kondensatoranordnung ist eine auf dem anderen Teil -zusätzlich zur Gegenelektrode- befindliche vierte Elektrode vorgesehen. Diese vierte Elektrode wird auf ein bestimmtes Potential, vorzugsweise Masse, gelegt und sorgt dadurch für eine definierte Feldverteilung.

Nach einer bevorzugten Ausführungsform der Erfindung dient der Stellungsgeber zur Erfassung einer Winkelstellung. Die beiden Teile der Kondensatoranordnung sind vorzugsweise als kreisförmige, zueinander parallele Platten ausgebildet, von denen eine einen Stator und die andere einen um den Kreismittelpunkt der Platten drehbaren Rotor bildet.

Vorzugsweise weist die erste, zweite und dritte Elektrode jeweils die Gestalt eines Kreisausschnitts von ca. 120° auf. Der Winkel von 120° wird nicht ganz erreicht, da die einzelnen Elektroden zu ihrer Isolierung voneinander beabstandet sein müssen. Die Kondensatoranordnung läßt sich auf einfache Weise mit kaschierten Leiterplatten realisieren, die eine der Elektrodenanordnung entsprechende Ätzung aufweisen, wobei das Substrat der Platinen den Träger für die jeweiligen Elektroden bildet.

Die Elektroden werden bevorzugt von Leiterbelägen der Platinen realisiert.

Die Gegenelektrode weist vorzugsweise die Gestalt eines Kreisausschnitts von ca. 240° auf. Sie ist an dem anderen Teil der Kondensatoranordnung ausgebildet. Der an diesem Teil verbleibende Kreisausschnitt von ca. 120° nimmt die vierte Elektrode auf, die der Homogenisierung (Feldsteuerung) der Kondensatoranordnung dient.

Um mechanische Toleranzen auszugleichen, die zu stellungsabhängigen Abstandsveränderungen zwischen den Elektroden und der Gegenelektrode führen können, sind die Elektroden und die Gegenelektrode in zueinander versetzte Elektrodenabschnitte unterteilt. Dies bedeutet, daß die jeweils zusammenwirkenden Elektrodenabschnitte sich nicht konzentriert an einer Stelle, sondern über die Gesamtanordnung verteilt befinden, wobei die zusammengehörenden Abschnitte jeweils elektrisch miteinander verbunden sind. Eine toleranzbedingte Änderung des Dielektrikums bei einer Stellungsänderung wirkt sich dann im wesentlichen nicht verfälschend aus, da sich die auftretenden Effekte (Abstandsverkleinerung, Abstandsvergrößerung) gegenseitig kompensieren. Die Elektrodenabschnitte sind vorzugsweise als Ringabschnittsflächen ausgebildet.

Zur Bestimmung der Stellung ist eine Schaltungsanordnung vorgesehen, die den vorliegenden Zustand der Kondensatoranordnung erfaßt und hieraus das Meßergebnis ableitet.

Die Anordnung ist derart ausgebildet, daß die Gegenelektrode über eine flexible elektrische Leitung mit der Schaltungsanordnung in Verbindung steht. Diese Leitung ist erforderlich, um das Potential der beweglichen Gegenelektrode der Schaltungsanordnung zur Auswertung zuzuleiten.

Alternativ ist es jedoch auch möglich, daß das eine der Teile eine fünfte Elektrode aufweist, die unabhängig von der Stellung mit der Gegenelektrode derart zusammenwirkt, daß die von der Gegenelektrode auf die fünfte Elektrode influenzierte Spannung ein Maß für den Ladungszustand der Gegenelektrode ist. Dies hat zur Folge, daß das die Gegenelektrode aufweisende Teil der Kondensatoranordnung keinen elektrischen Anschluß benötigt. Insofern ist es vorteilhaft, die erste, zweite, dritte und fünfte Elektrode ortsfest an einem Stator anzuordnen, während die Gegenelektrode sowie die vierte Elektrode an einem beweglichen Element (Rotor) ausgebildet sind.

Nach einer Weiterbildung der Erfindung ist vorgesehen, daß die fünfte Elektrode als zentral gelegene Kreisfläche ausgebildet ist. Ihr liegt ein entsprechender Abschnitt der Gegenelektrode gegenüber, die vorzugsweise die Gestalt des bereits erwähnten Kreisausschnitts von ca. 240° aufweist, wobei zusätzlich im zentralen Bereich eine einstückig mit der genannten Kreisausschnittsfläche zusammenhängende weitere Kreisausschnittsfläche vorgesehen ist, die den gleichen Radius wie die fünfte Elektrode aufweist und im Winkelbereich zwischen den beiden radial verlaufenden Randkanten des 240°-Kreisausschnitts liegt.

Für die Auswertung weist die Schaltungsanordnung einen Verstärker auf, der vorzugsweise als Operationsverstärker ausgebildet ist. Die zwischen der Gegenelektrode und der dritten Elektrode von der Kondensatoranordnung gebildete Kapazität ist in den Rückkopplungszweig dieses Verstärkers geschaltet.

Besonders vorteilhaft ist es, wenn die Spannungen der Gegenelektrode oder die influenzierte Spannung der fünften Elektrode von einem Synchrongleichrichter gleichgerichtet, eine sich vom angestrebten Wert "0" einstellende Abweichung durch einen als Integrator wirkenden Verstärker integriert und die das Integrationsergebnis darstellende Spannung mit einem synchronen Wechselrichter wieder in eine Wechselspannung verwandelt wird, die die dritte Wechselspannung bildet, welche der dritten Elektrode zugeführt wird, wobei die Ausgangsspannung des Integrators ein Maß für die vorliegende Stellung ist.

Zeichnung

Die Erfindung wird im folgenden anhand der Figuren näher erläutert. Es zeigen:

Figur 1     einen kapazitiven Stellungsgeber mit Schaltungsanordnung,

Figur 2     einen Längsschnitt durch den Stellungsgeber gemäß Figur 1,

Figur 3     ein Spannungsdiagramm der Anordnung gemäß Figur 1,

Figur 4     ein weiteres Ausführungsbeispiel eines kapazitiven Stellungsgebers mit Schaltungsanordnung,

Figur 5     ein Spannungsdiagramm der Anordnung gemäß Figur 4,

Figur 6     ein weiteres Ausführungsbeispiel einer Kondensatoranordnung eines Stellungsgebers,

Figur 7     ein weiteres Ausführungsbeispiel eines kapazitiven Stellungsgebers und

Figur 8     einen Längsschnitt durch den Stellungsgeber der Figur 7.

Beschreibung von Ausführungsbeispielen

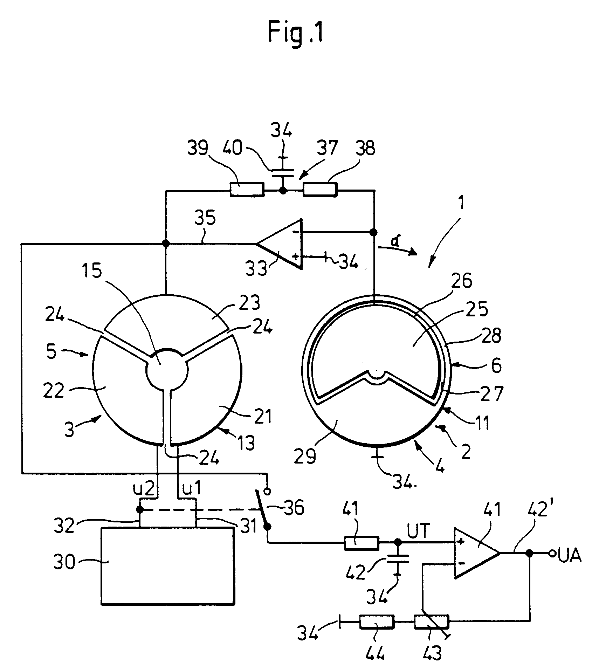

Die Figur 1 zeigt einen kapazitiven Stellungsgeber 1, der eine Kondensatoranordnung 2 aufweist. Der kapazitive Stellungsgeber 1 ist als Winkelsensor ausgebildet, das heißt, er ist zur Ermittlung einer Drehwinkelstellung ausgelegt. Vorzugsweise wird er in der Kraftfahrzeugtechnik zur Ermittlung der Drosselklappenstellung einer Brennkraftmaschine verwendet.

Die Kondensatoranordnung 2 weist zwei relativ zueinander bewegbare Teile 3 und 4 auf, wobei das eine Teil 3 einen Stator 5 und das andere Teil 4 einen Rotor 6 bildet.

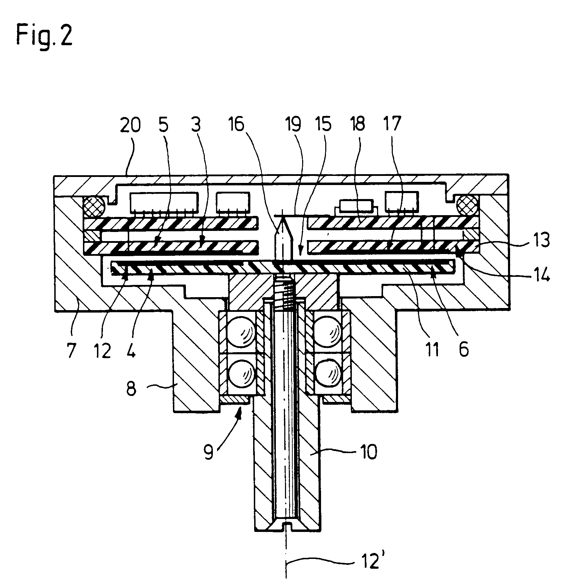

Der konstruktive Aufbau von Stator 5 und Rotor 6 geht insbesondere aus der Figur 2 hervor. Diese zeigt ein dosenförmiges Gehäuse 7 mit einem Gehäuseflansch 8, der ein Kugellager 9 trägt. Das Kugellager 9 lagert eine Welle 10, deren freies Ende mit der Drosselklappe der Brennkraftmaschine in Verbindung steht (nicht dargestellt). Das im Inneren des Gehäuses 7 liegende Ende der Welle 10 ist mit dem Rotor 6 drehfest verbunden. Der Rotor 6 besteht aus einer kreisförmigen Platte 11, deren Kreismittelpunkt mit der Längsachse 12' der Welle 10 fluchtet. Die Platte 11 bildet ein Trägersubstrat für eine Elektrodenanordnung 12, die auf der einen Seite der Platte 11 angeordnet ist. Parallel zur Platte 11 ist eine weitere Platte 13 vorgesehen, die -ebenso wie die Platte 11- einen kreisförmigen Grundriß aufweist und -im Gegensatz zur Platte 11- ortsfest mit dem Gehäuse 7 verbunden ist; mithin wird der Stator 5 gebildet. Die Platte 13, die eine Statorplatine 14 bildet, weist einen zentralen Durchbruch 15 auf, der von einem Kontaktstift 16 des Rotors 6 durchsetzt wird. Die eine Seite der Platte 13 ist ebenfalls mit einer Elektrodenanordnung 17 versehen, die mit der Elektrodenanordnung 12 zusammenwirkt.

Das Gehäuse 7 nimmt ferner eine Platine 18 auf, die als gedruckte Schaltung ausgebildet ist und Bauteile einer Schaltungsanordnung aufweist. An dem Kontaktstift 16 liegt ein flexibler elektrischer Federkontakt 19 an, der zur Schaltungsanordnung der Platine 18 führt. Alternativ kann auch zwischen dem Kontaktstift 16 und der Schaltungsanordnung ein flexibler Draht verlaufen. Kopfseitig ist das Gehäuse 7 mit einem Deckel 20 verschlossen.

Die Ausbildung der Elektrodenanordnungen 12 und 17 geht aus der Figur 1 hervor. Auf der Platte 13 des Stators 5 ist eine erste Elektrode 21, eine zweite Elektrode 22 und eine dritte Elektrode 23 ausgebildet. Die drei Elektroden 21,22,23 weisen kreisausschnittsförmige Gestalt auf, wobei von der reinen Kreisausschnittsform jedoch aufgrund des Durchbruchs 15 abgewichen wird. Der Stator 5 ist vorzugsweise eine mit leitfähigem Belag versehene Platine, wobei der leitfähige Belag die Elektroden 21,22,23 bildet. Diese werden vorzugsweise in Ätztechnik hergestellt; sie sind durch radial verlaufende Isolierzonen 24 voneinander getrennt. Aufgrund der Isolierzonen 24 weist jede Elektrode 21,22,23 einen Kreisausschnittswinkel von ca. 120° auf.

Der Rotor 6 der Kondensatoranordnung 2, der in der Figur 1 der Übersichtlichkeit halber neben dem Stator 5 dargestellt ist, sich jedoch im realen Zustand in paralleler, fluchtender Position zum Stator 5 befindet, ist mit einer Gegenelektrode 25 versehen, die die Gestalt eines Kreisausschnitts von ca. 240° aufweist. Der Außenrand 26 der Gegenelektrode 25 wird von einem durch eine Isolierzone 27 abgetrennten Elektrodenstreifen 28 umgeben, der einstückig in eine vierte Elektrode 29 übergeht, die etwa die Form eines Kreisausschnitts von ca. 120° aufweist.

Der Rotor 6 ist gegenüber dem Stator 5 um einen Drehwinkel $\alpha$ von +/- 60° drehbar (Meßbereich), wobei in der Figur 1 die "0"-Stellung dargestellt ist, in der die Gegenelektrode 25 jeweils die Hälfte der Flächen der ersten und zweiten Elektrode 21 und 22 überlappt. Die dritte Elektrode 23 wird vollflächig von der Gegenelektrode 25 überlappt, wobei dies in jeder Stellung des genannten Winkelbereichs (+/- 60°) erfolgt.

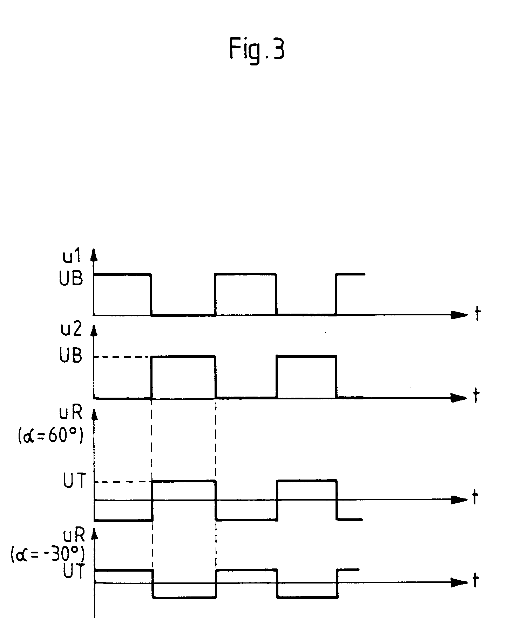

Die in der Figur 1 dargestellte Schaltungsanordnung weist einen Oszillator 30 auf, der an seinen beiden Ausgängen 31,32 die Wechselspannungen u1 und u2 zur Verfügung stellt. Die Spannung u1 bildet eine erste Wechselspannung, die an die erste Elektrode 21 gelegt ist. Die Spannung u2 stellt eine zweite Wechselspannung dar, die der zweiten Elektrode 22 zugeführt wird. In den oberen beiden Diagrammen der Figur 3 ist der zeitliche Verlauf der beiden in den Amplituden gleich großen Wechselspannungen u1 und u2 wiedergegeben. Es handelt sich jeweils um Rechteckspannungen, die einen gegenphasigen Verlauf aufweisen. Der Maximalwert der Wechselspannungen u1 und u2 ist mit UB gekennzeichnet.

Die Schaltungsanordnung der Figur 1 weist ferner einen Verstärker 33 auf, der als Operationsverstärker ausgebildet ist. Der Plus-Eingang des Verstärkers 33 ist an Masse 34 gelegt. Der Minus-Eingang ist an die Gegenelektrode 25 angeschlossen. Der Ausgang 35 des Verstärkers 33 führt zur dritten Elektrode 23 sowie zu einem Schalter 36. Dieser wird synchron mit der zweiten Wechselspannung u2 betätigt. Im Rückkopplungszweig zwischen dem Minus-Eingang und dem Ausgang 35 des Verstärkers 33 ist ein RC-Netzwerk 37 geschaltet, das aus einer Reihenschaltung von Widerständen 38 und 39 besteht, von deren gemeinsamen Verbindungspunkt ein Kondensator 40 ausgeht, der gegen Masse 34 geschaltet ist. Die vierte Elektrode 29 ist ebenfalls an Masse 34 gelegt.

Der Schalter 36 führt zu einem Widerstand 41, der zu einem Plus-Eingang eines Operationsverstärkers 41 führt. Der Plus-Eingang steht ferner über einen Kondensator 42 mit Masse 34 in Verbindung. Der Ausgang 42' des Operationsverstärkers 41 liegt an einer Reihenschaltung von Widerständen 43 und 44, wobei der Widerstand 43 als Potentiometer ausgebildet ist, dessen Schleifer zum Minus-Eingang des Operationsverstärkers 41 führt. Der Widerstand 44 ist an Masse 34 geschaltet. Am Ausgang 42' steht ein Meßsignal zur Verfügung, das der Relativstellung zwischen Stator 5 und Rotor 6 entspricht.

Aufgrund der Kondensatoranordnung 2 entstehen insgesamt fünf Plattenkondensatoren. Dies sind:

C1    gebildet durch Überdeckung der Elektrode 21 und der Gegenelektrode 25
C2    gebildet durch Überdeckung der Elektrode 22 und der Gegenelektrode 25
CR    gebildet durch Überdeckung der Elektrode 23 und der Gegenelektrode 25.

Daneben entstehen noch zwei Plattenkondensatoren zwischen der Elektrode 21 und der Elektrode 29 sowie zwischen der Elektrode 22 und der Elektrode 29. Diese beiden Plattenkondensatoren führen zur Homogenisierung der Felder und zur Erzeugung gleichmäßiger Lastkapazitäten für den Oszillator 30.

Die Kapazitäten C1 und C2 sind aufgrund ihrer variablen Flächenüberdeckung (mit der Gegenelektrode 25) im Winkelbereich -60° < $\alpha$ < +60° linear vom Drehwinkel $\alpha$ abhängig. Es gilt:

$$C1 = 0,5 \cdot \epsilon \cdot A/d \ (1 + \alpha/60°) \qquad [1]$$

$$C2 = 0,5 \cdot \epsilon \cdot A/d \ (1 - \alpha/60°) \qquad [2],$$

wobei $\epsilon$ die Dielektrizitätskonstante im Luftspalt ist und mit d die Dicke des Luftspalts zwischen den

5

EP 0 459 118 B1

Elektroden und mit A die aktive Fläche des jeweils gebildeten Kondensators bezeichnet wird.

Da die dritte Elektrode 23 unabhängig von der Winkelstellung stets vollflächig von der Gegenelektrode 25 abgedeckt wird, ist die Kapazität CR im angegebenen Bereich unabhängig vom Drehwinkel $\alpha$. Es gilt:

$$CR = \epsilon \cdot A/d \qquad [3]$$

Betrachtet man die Differenz der beiden Kapazitäten C1 und C2, so erhält man:

$$C1 - C2 = \frac{\epsilon \cdot A \cdot \alpha}{d \cdot 60°} \qquad [4],$$

also einen Wert, der sich proportional zum Drehwinkel $\alpha$ ändert, jedoch auch von den Größen $\epsilon$, A und d abhängt. Diese Größen sind jedoch stets von äußeren Einflüssen abhängig (Feuchtigkeitseinflüsse, Wärmedehnungen, mechanische Toleranzen usw.), so daß durch nicht vermeidbare Veränderungen dieser Größen Meßfehler auftreten.

Daher ist der zusätzliche Kondensator CR vorgesehen. Bildet man das Verhältnis:

(C1 - C2)/CR,

so ergibt sich mit [4] und [3]:

$$c(\alpha) = (C1 - C2)/CR = \alpha/60° \qquad [5]$$

Mithin ist $c(\alpha)$ von $\epsilon$, A und d unabhängig. Dies gilt in der Praxis mit guter Näherung, so lange parasitäre Schaltungskapazitäten parallel zu CR klein gegenüber CR sind.

Die in der Figur 1 wiedergegebene Schaltungsanordnung wandelt das Verhältnis $c(\alpha)$ in eine analoge Gleichspannung um, die am Ausgang 42' des Operationsverstärkers 41 zur Verfügung steht und ein Maß für die Winkelstellung darstellt. Aus der Schaltungsanordnung wird deutlich, daß die Kapazität CR im Rückkopplungszweig des Verstärkers 33 liegt. Da der Verstärker 33 eine große Spannungsverstärkung aufweist, bewirkt diese Rückkopplung, daß die an der Gegenelektrode 25 liegende Wechselspannung, die durch Influenzwirkung von den Spannungen an den Elektroden 21,22 und 23 erzeugt wird, praktisch den Wert "0" annimmt. Kapazitäten, die zwischen der Gegenelektrode 25 und Gehäuseteilen oder rückseitigen Massebelägen des Rotors 6 ausgebildet sind, haben deshalb keinen signifikanten Einfluß auf das Meßergebnis.

Für den gegengekoppelten Verstärker 33 gilt:

$$-uR = C1/CR \cdot u1 + C2/CR \cdot u2 \qquad [6],$$

wobei uR, u1 und u2 rechteckförmige Wechselspannungsanteile der Spannungen UR, U1 und U2 sind.
Dabei ist:

$$u1 = -u2 \qquad [7]$$

Aus [6] mit [7] und [5] resultiert:

$$uR/u2 = (C1 - C2)/CR = c(\alpha) = \alpha/60° \qquad [8]$$

Da wegen der Gleichspannungsrückkopplung (Netzwerk 37) und der Verbindung des Plus-Eingangs des Verstärkers 33 mit Masse 34 der Gleichspannungsanteil von UR = 0 ist, ist am Ausgang des Verstärkers 33 nur die rechteckförmige Wechselspannung uR vorhanden.

Diese Wechselspannung uR wird mit Hilfe des Schalters 36, der als elektronischer Schalter ausgebildet ist, in der positiven Halbwelle von u2 synchron abgetastet und der Abtastwert im Kondensator 42 gespeichert. Für den Abtastwert UT gilt dann:

6

UT = 0,5 UB $\alpha/60°$    [9],

wobei mit UB der Maximalwert der Wechselspannungen u1, u2 bezeichnet ist.

Der Kondensator 42 ist mit dem Plus-Eingang des Operationsverstärkers 41 verbunden, der als belastungsfähiger Treiber für das Ausgangssignal am Ausgang 42' dient und mittels der Widerstände 43 und 44 so geschaltet ist, daß seine Verstärkung v einstellbar und damit der Maßstabsfaktor für eine Winkel/Spannungswandlung justierbar ist. Für die Ausgangsspannung UA am Ausgang 42' gilt:

UA = 0,5 • v • UB • $\alpha/60°$    [10].

Die unteren beiden Diagramme der Figur 3 verdeutlichen die vorstehenden Ausführungen.

Die erfindungsgemäße Ausbildung hat folgende Vorteile:

Der Einfluß der Dielektrizitätskonstanten $\epsilon$, der absoluten Elektrodengröße A und der Dicke d des Luftspalts auf das Meßergebnis ist im wesentlichen eliminiert. Damit gehen Fertigungstoleranzen, axiales Lagerspiel des Rotors, Wärmeausdehnung und Luftfeuchtigkeit im Sensor nur noch in lediglich vernachlässigbarer Weise in das Meßergebnis ein.

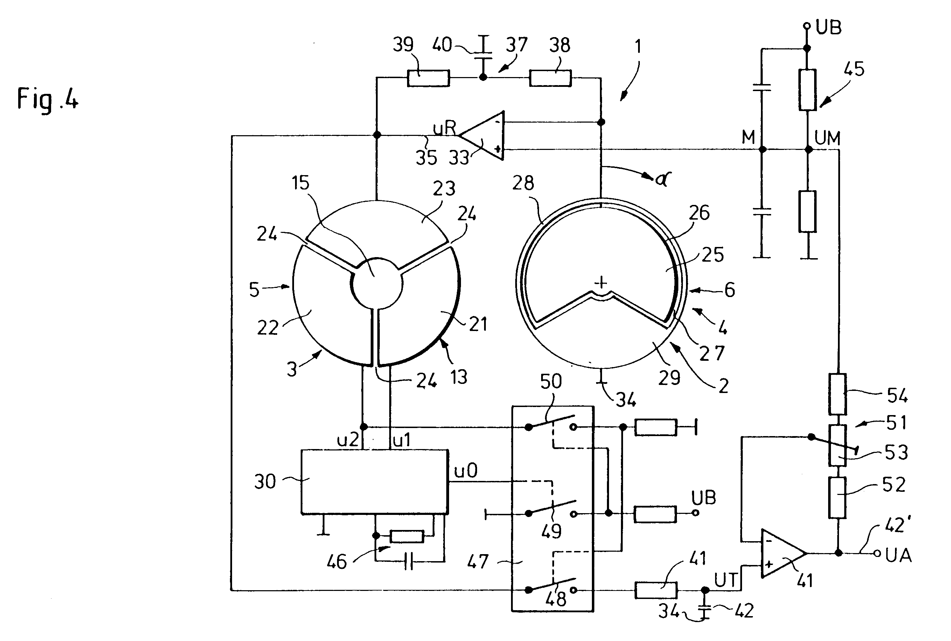

Die Figur 4 zeigt ein weiteres Ausführungsbeispiel, das mit CMOS IC's realisiert ist und vorzugsweise mit einer Betriebsspannung von 5 Volt arbeitet. Es handelt sich dabei um eine Spannung gegen Masse, das heißt, es steht keine symmetrische Betriebsspannung zur Masse zur Verfügung. Die Ausgestaltung der Figur 4 entspricht in vielen Punkten dem Ausführungsbeispiel der Figur 1, so daß auf letzteres verwiesen wird und hier nur die Unterschiede dargelegt werden. Mit Hilfe eines Spannungsteilers 45 wird die Betriebsspannung UB am Punkt M derart aufgeteilt, so daß dort die Gleichspannung UM für einen Offset am Operationsverstärker 33 zur Verfügung steht, der ungefähr der halben Betriebsspannung UB entspricht.

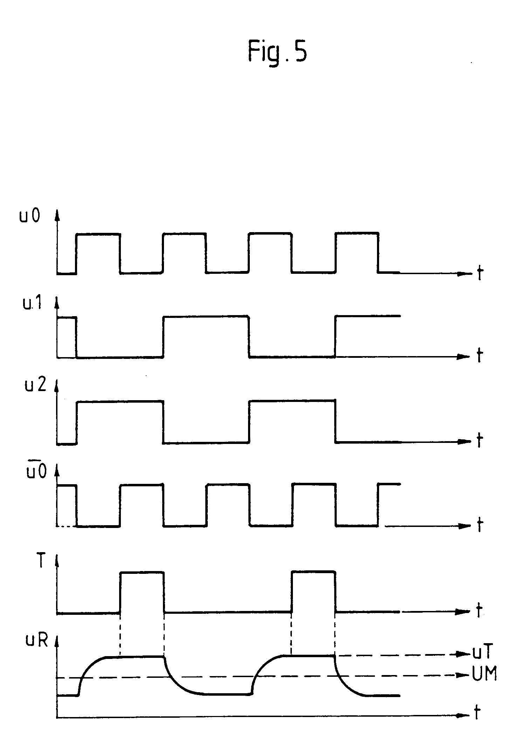

Als Oszillator 30 dient ein astabiler Multivibrator, dessen Frequenz durch eine externe Beschaltung 46 festgelegt wird. Außer den zueinander inversen rechteckförmigen Ausgangsspannungen u1 und u2 liefert der Oszillator 30 eine Rechteckspannung u0 der doppelten Frequenz. Dies ist in den Diagrammen der Figur 5 verdeutlicht. Der Verstärker 33, der vorzugsweise als Operationsverstärker ausgebildet ist, wird durch das Netzwerk 37 gleichspannungsmäßig zur Arbeitspunktstabilisierung gegengekoppelt. Als Wechselspannungsgegenkopplung dient die Kapazität CR zwischen dem Stator 5 und dem Rotor 6 der Kondensatoranordnung 2. Am Ausgang des Verstärkers 33 stellt sich (wegen der begrenzten Bandbreite und Anstiegszeit des Verstärkers nur angenähert) eine rechteckförmige Spannung uR ein.

Für den Drehwinkel $\alpha$ im Wertebereich $-60° < \alpha < +60°$ ist die Spannung uR - UM gegen Ende der negativen Halbwelle von u1 ein lineares Maß für den Drehwinkel $\alpha$ (vgl. Figur 5). In diesem Zeitpunkt gilt:

UT = UR

UT - UM = k • UB • $\alpha/60°$,

wobei k $\approx$ 0,5 ist. Die Spannung UT steht am Plus-Eingang des Operationsverstärkers 41 zur Verfügung. Mit Hilfe eines elektronischen Schalters 47 wird deshalb die Spannung uR während der zweiten Hälfte der negativen Halbwelle von u1 abgetastet und über den Widerstand 41 (Ladewiderstand) dem Ladekondensator 42 zugeführt. Die Abtastung erfolgt mit einem Schalter 48 des elektronischen Schalters 47. Dieser weist noch zwei weitere Schalter 49 und 50 auf, die dazu dienen, um aus u1 und u0 einen Abtastimpuls T herzustellen, der den Schalter 48 betätigt.

Der Operationsverstärker 41 ist so beschaltet, daß an seinem Ausgang 42' die Ausgangsspannung

UA = v(UT - UM) + UM = (v • k • UB)$\alpha/60°$ + UB/2

einstellt, wobei der Verstärkungsfaktor v mit Hilfe eines Spannungsteilers 51 einstellbar ist. Der Spannungsteiler 51 wird von der Reihenschaltung der Widerstände 52,53 und 54 hergestellt, wobei der Widerstand 54 zum Punkt M und der Widerstand 52 zum Ausgang 42' des Operationsverstärkers 41 führt und der Widerstand 53 als Potentiometer ausgebildet ist, dessen Schleifer mit dem Minus-Eingang des Operationsverstärkers 41 verbunden ist. Mit dem Potentiometer lassen sich fertigungsbedingte Toleranzen durch Einstellung der Steilheit der Kennlinie des Stellungsgebers korrigieren.

Bei den Ausführungsbeispielen der Figuren 1 und 4 haben Stator 5 und Rotor 6 je einen (aktiven) Durchmesser von 40 mm. Der Luftspalt d beträgt 0,8 mm. Die Oszillatorfrequenz f des Oszillators 30 liegt bei 25 kHz. Nach Einstellung der zuvor erwähnten Steilheit kann der Nullpunkt des Winkelmaßstabs neu definiert werden, so daß zum Beispiel beim (neuen) Winkel $\alpha' = 0$ die Ausgangsspannung UA gleich 0 ist. Die Kennlinie des so gebildeten Winkel-Spannungswandlers arbeitet zum Beispiel nach der Gleichung:

EP 0 459 118 B1

UA/UB = 0,008 α'

Sie wird bei der beschriebenen Versuchsanordnung im Winkelbereich 10° ≦ α' ≦ 110° mit einer maximalen Abweichung von +/- 0,5 % (vom Meßbereich) eingehalten.

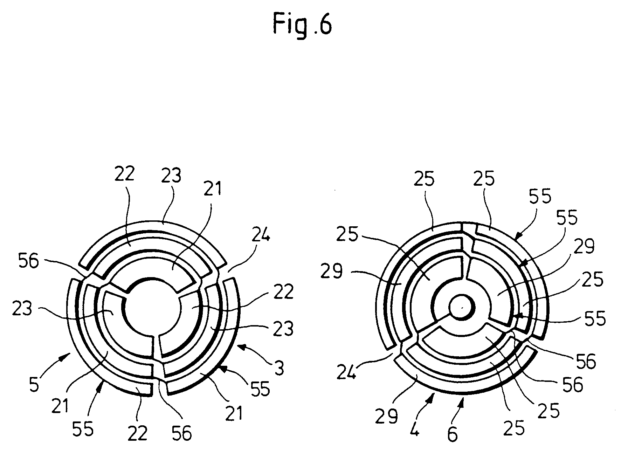

Bei der Ausgestaltung der Kondensatoranordnung gemäß der Figuren 1 und 4 können sich Meßfehler einstellen, wenn der Rotor 6 und der Stator 5 nicht bei jedem Drehwinkel α planparallel zueinander stehen. Insbesondere verursacht ein nicht exakt zur Längsachse 12' senkrecht stehender und somit taumelnder Rotor 6 Linearitätsfehler durch Luftspaltänderungen bezüglich der einzelnen Elektrodenpaare. Die Elektroden 21,22,23 und 29 sowie die Gegenelektrode 25 sind daher gemäß Figur 6 in zueinander versetzte Elektrodenabschnitte 55 unterteilt. Die einzelnen Elektrodenabschnitte 55 jeder Elektrode 21,22,23,29 beziehungsweise Gegenelektrode 25 sind elektrisch miteinander verbunden (elektrische Verbindungen 56). Im Ausführungsbeispiel der Figur 6 sind die Elektroden 21,22,23,29 und die Gegenelektrode 25 in jeweils drei gleich große Elektrodenabschnitte 55 unterteilt. Die Elektrodenabschnitte 55 weisen die Form von Ringabschnittsflächen auf. Betrachtet man den Rotor 6 im Ausführungsbeispiel der Figur 6, so sind deren Elektroden in entsprechend gleicher Weise unterteilt, das heißt die Gegenelektrode 25 wird in sechs und die vierte Elektrode 29 in drei gleich große Flächen aufgeteilt.

Wenn die Ebenen von Stator 5 und Rotor 6 bei der Anordnung der Figur 6 nicht ganz parallel zueinander sind, so wirkt sich dies näherungsweise auf alle von den Elektrodenabschnitten 55 gebildeten Kapazitäten gleich aus. Die Einflüsse auf das Meßergebnis kompensieren sich weitgehend. Fertigungsbedingten Parallelitätsfehler der Anordnung lassen sich durch diese Maßnahme in ihrer Auswirkung auf die Linearität des Meßergebnisses stark reduzieren.

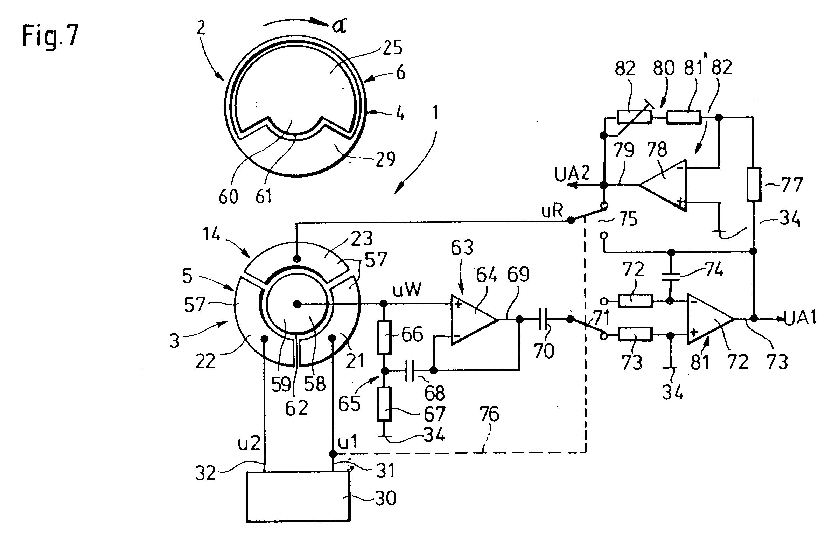

In der Figur 7 ist ein weiteres Ausführungsbeispiel dargestellt. In den zuvor erwähnten Ausführungsbeispielen vorhandene gleiche Teile sind mit gleichen Bezugszeichen versehen. In Abwandlung zum Ausführungsbeispiel der Figur 1 sind die erste, zweite und dritte Elektrode 21,22 und 23 als Ringabschnittsflächen 57 ausgebildet, wobei zentral eine fünfte Elektrode 58 vorgesehen ist, die eine Kreisfläche 59 bildet und mit der Gegenelektrode 25 zusammenwirkt. Hierzu weicht die Gegenelektrode 25 von ihrer Kreisausschnittsform insoweit ab, als sie zentral einstückig in eine Kreisausschnittsfläche 60 übergeht, deren Rand 61 deckungsgleich zum Rand 62 der Kreisfläche 59 liegt. Die vierte Elektrode 29 weist demzufolge eine Ringabschnittsform auf.

Die in Figur 7 gezeigte Schaltungsanordnung ist mit einem Impedanzwandler 63 versehen, der einen Operationsverstärker 64 aufweist. Der Plus-Eingang des Operationsverstärkers 64 ist mit der fünften Elektrode 58 verbunden. Ferner steht diese mit einem Spannungsteiler 65 in Verbindung, der von den Widerständen 66 und 67 gebildet wird. Der Widerstand 67 liegt mit seinem einen Anschluß an Masse 34. Zwischen dem Verbindungspunkt der Widerstände 66 und 67 und dem Minus-Eingang des Operationsverstärkers 64 ist ein Kondensator 68 geschaltet. Ferner ist der Minus-Eingang des Operationsverstärkers 64 mit seinem Ausgang 69 verbunden. Der Ausgang 69 des Operationsverstärkers 64 ist über einen Kondensator 70 an einen Umschalter 71 angeschlossen. Je nach Stellung des Umschalters 71 erfolgt über einen Widerstand 72 beziehungsweise 73 eine Verbindung zu einem Minus-Eingang oder Plus-Eingang eines Operationsverstärkers 72. Der Plus-Eingang des Operationsverstärkers 72 ist an Masse 34 gelegt. Am Ausgang 73 des Operationsverstärkers 72 steht die Ausgangsspannung UA1 zur Verfügung. Der Ausgang 73 ist über einen Kondensator 74 mit dem Minus-Eingang des Operationsverstärkers 72 verbunden. Ferner führt der Ausgang 73 zu einem Pol eines weiteren Umschalters 75, der synchron zum Umschalter 71 betätigt wird. Die Betätigung der Umschalter 71 und 75 erfolgt in Abhängigkeit von der Wechselspannung u1. Dies ist in der Figur 7 durch eine Wirkverbindung 76 verdeutlicht.

Über einen Widerstand 77 ist der Ausgang 73 des Operationsverstärkers 72 an den Minus-Eingang eines weiteres Operationsverstärkers 78 angeschlossen, dessen Plus-Eingang an Masse 34 gelegt ist. Zwischen dem Minus-Eingang und dem Ausgang 79 des Operationsverstärkers 78 liegt eine Reihenschaltung 80 eines Widerstands 81' und eines Potentiometers 82. Am Ausgang 79 steht die Ausgangsspannung UA2 zur Verfügung. Der Ausgang führt ferner zu einem weiteren Anschluß des Umschalters 75, dessen Bockpol mit der dritten Elektrode 23 verbunden ist.

Die Schaltungsanordnung der Figur 7 weist folgende Funktion auf:
Durch die Wechselspannungen u1 und u2 influenzieren die Elektroden 21 und 22 eine Wechselspannung ui auf der Gegenelektrode 25, die wegen der veränderlichen Überdeckung der Elektroden 21 und 22 zur Gegenelektrode 25 vom Drehwinkel α abhängt. Die Spannung ui wiederum influenziert auf die fünfte Elektrode 58 eine zu ui proportionale Wechselspannung uW. Der Operationsverstärker 64 dient mit seiner Bootstrap-Beschaltung als Impedanzwandler 63 für die durch die Kondensatoranordnung gebildete Spannungsquelle, die einen großen kapazitiven Quellwiderstand aufweist. Der nachfolgende elektronische Um-

8

schalter (Umschalter 71), der synchron mit der Wechselspannung u1 schaltet (Synchrongleichrichter) verbindet den Ausgang des Impedanzwandlers 63 mit dem Eingang des Operationsverstärkers 72, der als Integrator 81 arbeitet. Die Anordnung ist derart ausgebildet, daß der Integrator 81 nur während einer Halbwelle mit der ebenfalls synchronen Wechselspannung uW verbunden wird. Bei positivem Winkel $\alpha$ läuft der Integrator 81 schrittweise in die negative Richtung bei negativem Winkel $\alpha$ in die positive Richtung. Die Ausgangsspannung des Integrators 81 (Spannung UA1) wird mit Hilfe des Operationsverstärkers 78, der einen Invertierer 82 bildet, invertiert. Mithin gilt:

UA2 = -UA1

Mit Hilfe des synchronen Umschalters 75 wird jetzt wieder eine synchrone rechteckförmige Wechselspannung uR erzeugt, deren Amplitude dem Wert UA1 entspricht und deren Phasenlage entgegengesetzt zu der von uW ist. Die Spannung uR wird an die dritte Elektrode 23 angelegt. Sie influenziert auf der Gegenelektrode eine die ursprüngliche Wechselspannung ui kompensierende Spannung. Insofern liegt hier eine Gegenkopplung vor, das heißt, es ist ein Regelkreis mit einem i-Regler entstanden. Der Integrator 81 arbeitet so lange, bis die Wechselspannung uw = 0 und damit auch ui = 0 sind. Die Gleichspannung UA1 ist nach Ablauf des Regelvorgangs ein Maß für den Drehwinkel $\alpha$. Diese Anordnung hat gegenüber den Ausführungsbeispielen der Figuren 1 und 4 den Vorteil, daß keine Verbindung (Kontaktstift 16, elektrische Leitung 19) zur Schaltungsanordnung notwendig ist.

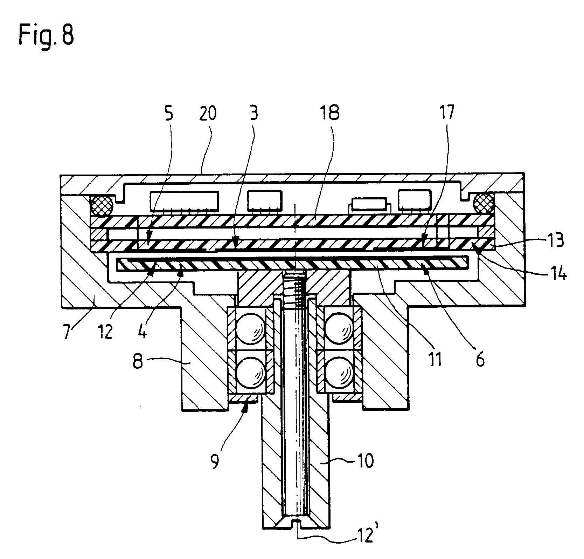

Die Figur 8 zeigt den konstruktiven Aufbau der Kondensatoranordnung des Ausführungsbeispiels der Figur 7. Es wird deutlich, daß der Stator 5 und auch die Platine 18 keinen Durchbruch benötigen.

Der erfindungsgemäße kapazitive Stellungsgeber weist vorzugsweise eine Rotor- und eine Statorplatine aus isolierendem Material (z.B. Leiterplattenmaterial, Glas, Keramik oder dergleichen) auf. Auf diesen Platinen sind einfache, nicht notwendigerweise sehr fein auszubildende Leiterstrukturen vorgesehen. An diese werden nur geringe Anforderungen bezüglich der Leitfähigkeit gestellt. Die Elektrodenstrukturen bildenden Leiterstrukturen können zum Beispiel auf kaschiertem Substrat in Ätztechnik oder mittels Siebdruck mit einer leitfähigen Druckpaste erzeugt werden. Die Rotorplatine könnte nach einem nicht dargestellten Ausführungsbeispiel aus entsprechend geformtem Blech, das isoliert an der Welle 10 angeordnet ist, bestehen. Gegenüber einem induktiven Stellungsgeber besteht beim kapazitiven Stellungsgeber der Vorteil, daß das elektrische Feld zwischen den Elektroden sehr gleichmäßig ist und nicht durch die Welligkeit, wie sie durch das Magnetfeld einer Spule entsteht, zu nichtlinearen (welligen) Kennlinie führt. Die Schaltungsanordnung der erfindungsgemäßen Ausbildung ist sehr einfach und benötigt nur sehr wenig Betriebsstrom. Dies insbesondere auch wegen der nur geringen Arbeitsfrequenz. Die auftretenden elektrischen Felder sind sehr leicht abschirmbar, was bei den magnetischen Feldern von induktiven Stellungsgebern nicht der Fall ist. Störende Emissionen oder Immissionen sind deshalb nicht zu befürchten.

**Patentansprüche**

1. Kapazitiver Stellungsgeber, insbesondere Winkelsensor, vorzugsweise zur Erfassung der Drosselklappenstellung bei Brennkraftmaschinen, der eine sich in Abhängigkeit von der Stellung in ihrem Kapazitätswert ändernde Kondensatoranordnung (2), die zwei relativ zueinander bewegbare Teile (3, 4) umfaßt, aufweist, wobei ein Teil (3) mehrere Elektroden (21, 22, 23, 58) besitzt die einer gemeinsamen Gegenelektrode (25) auf dem anderen Teil (4) gegenüberliegen und, von denen eine erste Elektrode (21) mit einer ersten Wechselspannung (u1) und eine zweite Elektrode (22) mit einer zur ersten Wechselspannung (u1) verschoben zweiten Wechselspannung (u2) mit gleicher Amplitude gespeist wird, so daß über der gemeinsamen Gegenelektrode in einer dritten Elektrode (23) eine dritte Wechselspannung (uR) influenziert wird deren Betrag und Phasenlage relativ zu einem Bezugswert ein Maß für die Relativstellung der bewegbaren Teile (3, 4) ist, dadurch gekennzeichnet, daß die zweite Wechselspannung (u2) gegenüber der ersten Wechselspannung gegenphasig ist, daß die zwischen der Gegenelektrode (25) und der dritten Elektrode (23) gebildete Kapazität CR im Rückkopplungszweig eines Verstärkers (33), insbesondere Operationsverstärkers angeordnet ist, und daß ein Schalter (36) vorgesehen ist, der die dritte Wechselspannung (uR) synchron mit der zweiten Wechselspannung abtastet, so daß sie durch ihren Betrag und ihre Phasenlage die von den Elektroden (21,22) gemeinsam auf eine Gegenelektrode (25) der anderen Teile (4) influenzierte Spannung auf einen festen Wert, insbesondere auf den Wert "0" kompensiert.

2. Stellungsgeber nach Anspruch 1, **dadurch gekennzeichnet**, daß die Gegenelektrode (25) derart ausgestaltet ist, daß in gesamten Meßbereich die dritte Elektrode (23) stets vollflächig einem entspre-

EP 0 459 118 B1

chenden, gleich großen Anteil der Gegenelektrode (25) gegenüberliegt.

3. Stellungsgeber nach einem der vorhergehenden Ansprüche, **dadurch gekennzeichnet**, daß die Gegenelektrode (25) den ersten und zweiten Elektroden (21,22) mit derartigen Anteilen gegenüberliegt, daß sich bei einer Stellungsänderung die aktive Fläche bezüglich der ersten Elektrode (21) und der Gegenelektrode (25) um das Maß verkleinert (vergrößert) wie die aktive Fläche zwischen der zweiten Elektrode (22) und der Gegenelektrode (25) zunimmt (abnimmt).

4. Stellungsgeber nach einem der vorhergehenden Ansprüche, **dadurch gekennzeichnet**, daß die von der ersten und der zweiten Elektrode (21,22) influenzierte Spannung von der Relativstellung der Teile (3,4) abhängig ist.

5. Stellungsgeber nach einem der vorhergehenden Ansprüche, **gekennzeichnet durch** eine auf dem anderen Teil (4) befindliche, der Homogenisierung der elektrischen Felder der Kondensatoranordnung (2) dienende vierte Elektrode (29).

6. Stellungsgeber nach einem der vorhergehenden Ansprüche, **dadurch gekennzeichnet**, daß die Teile (3,4) als kreisförmige, zueinander parallele Platten (11,13) ausgebildet sind, von denen eine einen Stator (5) und die andere einen um den Kreismittelpunkt der Platten (11,13) drehbaren Rotor (6) bildet.

7. Stellungsgeber nach einem der vorhergehenden Ansprüche, **dadurch gekennzeichnet**, daß die erste, zweite und dritte Elektrode (21,22,23) jeweils die Gestalt eines Kreisausschnitts von ca. 120° aufweist.

8. Stellungsgeber nach einem der vorhergehenden Ansprüche, **dadurch gekennzeichnet**, daß die Gegenelektrode (25) die Gestalt eines Kreisausschnitts von ca. 240° aufweist.

9. Stellungsgeber nach den Ansprüchen 5 und 8, **dadurch gekennzeichnet**, daß der am anderen Teil (4) verbleibende Kreisausschnitt von ca. 120° die vierte Elektrode (29) bildet.

10. Stellungsgeber nach dem Anspruch 5, **dadurch gekennzeichnet**, daß die vierte Elektrode (29) an Massepotential liegt.

11. Stellungsgeber nach dem Anspruch 5, **dadurch gekennzeichnet**, daß die ersten, zweiten und dritten Elektroden (21,22,23) und die Gegenelektrode (25) in zueinander versetzte Elektrodenabschnitte (55) unterteilt sind.

12. Stellungsgeber nach dem Anspruch 11, **dadurch gekennzeichnet**, daß die Elektrodenabschnitte (55) als Ringabschnittsflächen (57) ausgebildet sind.

13. Stellungsgeber nach einem der vorhergehenden Ansprüche, **dadurch gekennzeichnet**, daß die Gegenelektrode (25) über eine flexible elektrische Leitung (19) mit der Schaltungsanordnung verbunden ist.

14. Stellungsgeber nach einem der vorhergehenden Ansprüche, **dadurch gekennzeichnet**, daß der eine Teil (3) eine weitere Elektrode (58) aufweist, die unabhängig von der Stellung mit der Gegenelektrode (25) derart zusammenwirkt, daß die von der Gegenelektrode (25) auf die fünfte Elektrode (58) influenzierte Spannung ein Maß für den Ladungszustand der Gegenelektrode (25) ist.

15. Stellungsgeber nach einem der vorhergehenden Ansprüche, **dadurch gekennzeichnet**, daß die weitere Elektrode (58) als zentral gelegene Kreisfläche (59) ausgebildet ist.

16. Stellungsgeber nach einem der vorhergehenden Ansprüche, **dadurch gekennzeichnet**, daß die Spannung der Gegenelektrode (25) oder die influenzierte Spannung der weiteren Elektrode (58) von einem Synchrongleichrichter (Umschalter 71) gleichgerichtet, eine sich von dem angestrebten Wert "0" einstellende Abweichung durch einen als Integrator (81) wirkenden Verstärker (Operationsverstärker 72) integriert und die das Integrationsergebnis darstellende Spannung (UA1) mit einem synchronen Wechselrichter (Umschalter 75) wieder in eine Wechselspannung verwandelt wird, die die dritte Wechselspannung (uR) bildet, welche der dritten Elektrode (23) zugeführt wird, wobei die Ausgangsspannung

10

EP 0 459 118 B1

(UA1) des Integrators (81) ein Maß für die Stellung darstellt.

**Claims**

1. Capacitive position encoder, in particular an angle sensor, preferably for detecting the throttle position in internal combustion engines, which has a capacitor arrangement (2) which varies in its capacitance as a function of the position and comprises two parts (3, 4) which can be moved relative to one another, one part (3) having a plurality of electrodes (21, 22, 23, 58) which are situated opposite a common counter-electrode (25) on the other part (4) and of which a first electrode (21) is fed with a first alternating voltage (u1) and a second electrode (22) is fed with a second alternating voltage (u2), of the same amplitude, which is shifted with respect to the first alternating voltage (u1), with the result that a third alternating voltage (uR), whose absolute value and phase angle relative to a reference value are a measure of the relative position of the movable parts (3, 4), is influenced in a third electrode (23) via the common counter-electrode, characterized in that the second alternating voltage (u2) is in antiphase with respect to the first alternating voltage, in that the capacitor (CR) formed between the counter-electrode (25) and the third electrode (23) is arranged in the feedback path of an amplifier (33), in particular an operational amplifier, and in that a switch (36) is provided which samples the third alternating voltage (uR) synchronously with the second alternating voltage so that by means of its absolute value and its phase angle it compensates to a fixed value, in particular to the value "0", the voltage influenced by the electrodes (21, 22) jointly to a counter-electrode (25) of the other parts (4).

2. Position encoder according to Claim 1, characterized in that the counter-electrode (25) is configured in such a way that over the entire measurement range the third electrode (23) is always situated with all its area opposite a corresponding portion, of the same size, of the counter-electrode (25).

3. Position encoder according to one of the preceding claims, characterized in that the counter-electrode (25) is situated opposite the first and second electrodes (21, 22) with portions such that in the event of a change in position, the active area with respect to the first electrode (21) and the counter-electrode (25) is reduced (enlarged) by the extent to which the active area between the second electrode (22) and the counter-electrode (25) increases (decreases).

4. Position encoder according to one of the preceding claims, characterized in that the voltage influenced by the first and the second electrodes (21, 22) depends on the relative position of the parts (3, 4).

5. Position encoder according to one of the preceding claims, characterized by a fourth electrode (29) which is located on the other part (4) and serves to homogenize the electric fields of the capacitor arrangement (2).

6. Position encoder according to one of the preceding claims, characterized in that the parts (3, 4) are constructed as circular, mutually parallel plates (11, 13) of which one forms a stator (5) and the other forms a rotor (6) which can rotate about the circle centre of the plates (11, 13).

7. Position encoder according to one of the preceding claims, characterized in that the first, second and third electrodes (21, 22, 23) respectively have the shape of a sector of approximately 120°.

8. Position encoder according to one of the preceding claims, characterized in that the counter-electrode (25) has the shape of a sector of approximately 240°.

9. Position encoder according to Claims 5 and 8, characterized in that the sector of approximately 120° remaining on the other part (4) forms the fourth electrode (29).

10. Position encoder according to Claim 5, characterized in that the fourth electrode (29) is connected to frame potential.

11. Position encoder according to Claim 5, characterized in that the first, second and third electrodes (21, 22, 23) and the counter-electrode (25) are subdivided into mutually offset electrode sections (55).

11

**12.** Position encoder according to Claim 11, characterized in that the electrode sections (55) are constructed as sectional annular surfaces (57).

**13.** Position encoder according to one of the preceding claims, characterized in that the counter-electrode (25) is connected to the circuit arrangement via a flexible electric line (19).

**14.** Position encoder according to one of the preceding claims, characterized in that one part (3) has a further electrode (58) which cooperates independently of position with the counter-electrode (25) in such a way that the voltage influenced by the counter-electrode (25) to the fifth electrode (58) is a measure of the charge state of the counter-electrode (25).

**15.** Position encoder according to one of the preceding claims, characterized in that the further electrode (58) is constructed as a centrally positioned circular surface (59).

**16.** Position encoder according to one of the preceding claims, characterized in that the voltage of the counter-electrode (25) or the influenced voltage of the further electrode (58) is rectified by a synchronous rectifier (changeover switch 71), a deviation which arises from the target value "0" is integrated by an amplifier (operational amplifier 72) acting as an integrator (81), and the voltage (UA1) representing the result of integration is reconverted by means of a synchronous inverter (changeover switch 75) into an alternating voltage which forms the third alternating voltage (uR) which is fed to the third electrode (23), the output voltage (UA1) of the integrator (81) representing a measure of the position.

**Revendications**

**1.** Capteur de position capacitif, en particulier détecteur d'angle, de préférence pour détecter la position du clapet d'étranglement dans le cas de moteurs à combustion interne, qui comprend un système de condensateurs (2) variant en fonction de la position quant à la valeur de sa capacité, système qui comprend deux parties (3, 4) mobiles l'une par rapport à l'autre, une partie (3) possédant plusieurs électrodes (21, 22, 23, 58) qui sont situées en regard d'une contre-électrode commune (25) se trouvant sur l'autre partie (4) alors que, parmi les électrodes, une première électrode (21) est alimentée par une première tension alternative (u1) et une deuxième électrode (22) est alimentée par une tension alternative (u2) de même amplitude mais déphasée par rapport à la première tension alternative (u1), de telle sorte que, par l'intermédiaire de la contre-électrode commune, une troisième tension alternative soit influencée dans une troisième électrode (23), capteur de position capacitif caractérisé en ce que la deuxième tension alternative (u2) est en opposition de phase par rapport à la première tension alternative, en ce que la capacité CR formée entre la contre-électrode (25) et la troisième électrode (23) est disposée dans la branche de réinjection d'un amplificateur (33), en particulier d'un amplificateur opérationnel, et en ce que l'on prévoit un interrupteur (36) qui détecte de façon synchrone avec la seconde tension alternative, la troisième tension alternative (uR) de telle façon qu'elle compense par son amplitude et sa position de phase, la tension influencée par les électrodes (21, 22), en commun sur une contre-électrode (25) des autres parties (4), sur une valeur fixe, en particulier sur la valeur "zéro", tension dont l'amplitude et la position de phase, par rapport à une valeur de référence, est une mesure de la position relative des parties mobiles (3, 4).

**2.** Capteur de position selon la revendication 1, caractérisé en ce que la contre-électrode (25) est constituée de telle façon que, dans toute la zone de mesure, la troisième électrode (23) se trouve constamment avec toute sa surface en regard d'une portion de même grandeur de la contre-électrode (25).

**3.** Capteur de position selon l'une des revendications précédentes, caractérisé en ce que la contre-électrode (25) se trouve en regard de la première et de la seconde électrode (21, 22) avec des portions telles que, dans le cas d'une variation de la position, la surface active en ce qui concerne la première électrode (21) et la contre-électrode (25) diminue (grandit) d'une amplitude égale à celle dont la surface active comprise entre la deuxième électrode et la contre-électrode (25) croît (diminue).

**4.** Capteur de position selon l'une des revendications précédentes, caractérisé en ce que la tension, influencée par la première et la seconde électrode (21, 22), est fonction de la position relative des parties (3, 4).

5. Capteur de position selon l'une des revendications précédentes, caractérisé par une quatrième électrode (29) se trouvant sur l'autre partie (4), servant à l'homogénéisation des champs électriques du système de condensateurs (2).

6. Capteur de position selon l'une des revendications précédentes, caractérisé en ce que les parties (3, 4) sont constituées sous la forme de disques de forme circulaire (11, 13), parallèles l'un à l'autre, dont l'un forme un stator (5) et l'autre un rotor (6) qui peut tourner autour du centre des disques (11, 13).

7. Capteur de position selon l'une des revendications précédentes, caractérisé en ce que la première, la seconde et la troisième électrode (21, 22, 23) présentent respectivement la forme d'un secteur de cercle d'environ 120°.

8. Capteur de position selon l'une des revendications précédentes, caractérisé en ce que la contre-électrode (25) présente la forme d'un secteur de cercle d'environ 240°.

9. Capteur de position selon les revendications 5 et 8, caractérisé en ce que le secteur de cercle restant d'environ 120°, sur l'autre partie (4) constitue la quatrième électrode (29).

10. Capteur de position selon la revendication 5, caractérisé en ce que la quatrième électrode (29) est au potentiel de la masse.

11. Capteur de position selon la revendication 5, caractérisé en ce que la première, la deuxième et la troisième électrode (21, 22, 23) et la contre-électrode (25), sont subdivisées en secteurs d'électrodes (55) décalés les uns par rapport aux autres.

12. Capteur de position selon la revendication 11, caractérisé en ce que les secteurs d'électrodes (55) sont constitués sous la forme de surfaces annulaires sectorielles (57).

13. Capteur de position selon l'une des revendications précédentes, caractérisé en ce que la contre-électrode (25) est reliée au circuit par une canalisation flexible électrique (19).

14. Capteur de position selon l'une des revendications précédentes, caractérisé en ce que l'une des parties , la partie (3), présente une autre électrode (58) qui coopère, indépendamment de la position, avec la contre-électrode (25) de telle façon que la tension influencée par la contre-électrode (25) sur la cinquième électrode (58) soit une mesure de l'état de charge de la contre-électrode (25).

15. Capteur de position selon l'une des revendications précédentes, caractérisé en ce que l'autre électrode (58) est constituée sous la forme d'une surface circulaire (59) mise au centre.

16. Capteur de position selon l'une des revendications précédentes, caractérisé en ce que la tension de la contre-électrode (25) ou la tension influencée de l'autre électrode (58), est redressée par un redresseur synchrone (convertisseur 71) et intégrée par un amplificateur agissant en intégrateur (81) (amplificateur opérationnel 72), un écart s'établissant à partir de la valeur "0" désirée, et la tension (UA1) représentant le résultat de l'intégration est convertie par un onduleur synchrone (convertisseur 75) de nouveau en une tension alternative constituant la troisième tension alternative (uR) qui mène à la troisième électrode (23), la tension de sortie (UA1) de l'intégrateur (81) représentant une mesure de la position.

# Fig.1

Fig. 2

Fig. 3

Fig.4

EP 0 459 118 B1

Fig. 5

# Fig.6

Fig.7

EP 0 459 118 B1

Fig. 8